# EUROPEAN PATENT APPLICATION

(11) **EP 4 727 183 A1**
(43) Date of publication of application: **15.04.2026**
(21) Application number: 23940976.6
(22) Date of filing: 12.06.2023
(51) Int. Cl.: H04W 12/06

(54) **METHOD FOR PROVIDING NETWORK SERVICE, AND COMMUNICATION APPARATUS**

(71) Applicant: Huawei Technologies Co., Ltd., Shenzhen, Guangdong 518129 (CN)
(72) Inventor: XING, Weijun, Shenzhen, Guangdong 518129 (CN); WU, Shaoyun, Shenzhen, Guangdong 518129 (CN); YAO, Qi, Shenzhen, Guangdong 518129 (CN); XUE, Yifei, Shenzhen, Guangdong 518129 (CN)
(74) Representative: Isarpatent
(86) International application number: PCT/CN2023/099723
(87) International publication number: WO 2024/254738

(57) **Abstract**

This application provides a method for providing a network service. A terminal device initiates a request for changing a policy of a network service used by the terminal device, or a request for changing a network service used by the terminal device. Correspondingly, a network side changes the policy of the network service or the network service of the terminal device based on the request of the terminal device, so that the terminal device can flexibly change the network service used by the terminal device. According to the technical solutions of this application, the network side may open more network control capabilities to the terminal device, so that the terminal device can flexibly customize or change the network service used by the terminal device or the policy of the network service.

## Description

### TECHNICAL FIELD

Embodiments of this application relate to the field of wireless communication technologies, and more specifically, to a method for providing a network service and a communication apparatus.

### BACKGROUND

A future mobile network may not only provide connection services, but also provide new non-connection services such as an artificial intelligence (artificial intelligence, AI) service, a computing service, a data service, or a sensing service. For connection services in a conventional technology, a terminal serves only as a consumer to use a connection service provided by a network. However, in a non-connection service, a relationship between the terminal and the network may change. Specifically, the terminal may also become a network service provider, for example, provide a capability service of the terminal, for example, a sensing capability, a computing capability, and a data processing capability of the terminal, for the network. Therefore, the terminal may provide a network service for the network, and the terminal also uses a network service, for example, a connection service and a non-connection service, provided by the network.

Currently, a mobile network technology designed for a connection service cannot support a terminal in flexibly customizing or changing a network service (especially a non-connection service provided by a future mobile network) used by the terminal.

### SUMMARY

This application provides a method for providing a network service and a communication apparatus, so that a terminal can flexibly change or customize a network service used by the terminal.

According to a first aspect, a method for providing a network service is provided. The method is applied to a first terminal device (an example of a terminal apparatus), or may be applied to a chip, a chip system, a hardware circuit, a software module, a combination of a hardware circuit and a software module, or the like that is installed in the first terminal device. The following uses the first terminal device as an example for description. The method includes:
sending a first request message to a first network element, where
the first request message is used to request to change a policy of a network service of the first terminal device, and the first request message carries information used to change the policy of the network service; or the first request message is used to request to change a network service of the first terminal device, and the first request message carries parameter information that is of the network service and that needs to be changed; and
receiving a first response message for the first request message.

According to the technical solution provided in this application, the first terminal sends, to the first network element, the request for changing the policy of the network service used by the first terminal, where the request carries the information used to change the policy of the network service; or the first terminal sends, to the first network element, the request for changing the network service used by the first terminal, where the request carries the parameter information (or a service parameter) that is of the network service and that needs to be changed, so that the first terminal can flexibly change or customize the network service of the first terminal.

With reference to the first aspect, in some implementations of the first aspect, the first network element is a policy control function PCF or a user network control function UNCF, and the first request message is used to request to change the policy of the network service of the first terminal device.

Optionally, there may be a plurality of different implementations in which the first terminal changes the policy of the network service used by the first terminal. In a possible implementation, the first terminal requests the policy control function or the user network control function to change the policy of the network service of the first terminal.

With reference to the first aspect, in some implementations of the first aspect, the first request message carries information about the network service, and the information about the network service includes one or more of the following:
the network service includes a connection service, and the information about the network service includes identification information of a session;
the network service includes a data service, and the information about the network service includes identification information and/or address information of a storage device;
the network service includes a computing service, and the information about the network service includes information about a computing resource; and
the network service includes a task service, and the information about the network service includes identification information of a task.

Based on this implementation, a network side may open more network control capabilities to the terminal, and support the first terminal in flexibly changing policies of a plurality of non-connection services that may be supported by a future communication network.

Optionally, in some implementations of the first aspect, changing the policy of the network service includes one or more of the following:
adding and/or deleting a terminal device using the network service;
adding and/or deleting a network device providing the network service;
changing use permission of the terminal device using the network service;
changing the policy of the network service used by the terminal device using the network service; and
changing subscription information of a status of using the network service by the terminal device using the network service.

Based on this implementation, a terminal (for example, a terminal A, as a sharer of a network service) may share the network service of the terminal with another terminal (for example, a terminal B, as a user of the network service) for use, and may also flexibly cancel use permission of the another terminal to the network service. In addition, the terminal A may add and/or delete a network device providing the network service, and change information such as permission, a policy, and subscription of a usage status of the network service used by the terminal B. It may be learned that the network service may be flexibly shared and changed between terminals, and a communication network may provide a more intelligent network service.

Optionally, in some implementations of the first aspect, the use permission includes one or more of the following:
information about an application and/or a website that are/is allowed to be used;
information about an application and/or a website that are/is prohibited from being used; and
allowing the terminal device using the network service to use a network device in a first network, where the network service is provided by the first network.

In this implementation, the sharer of the network service is supported in flexibly controlling the use permission of the user of the network service.

Optionally, in some implementations of the first aspect, the policy of the network service further includes one or more of the following:
duration of the network service;
data usage of the network service; and
quality of service QoS of the network service.

In this implementation, the terminal is supported in flexibly customizing aspects such as a service parameter and performance of the network service of the terminal.

With reference to the first aspect, in some implementations of the first aspect, the first response message indicates that the first network element accepts a request for changing the policy of the network service of the first terminal device, and the first response message further includes a change result of the policy of the network service of the first terminal device.

With reference to the first aspect, in some implementations of the first aspect, changing the policy of the network service of the first terminal device includes one or more of the following cases:
adding a second terminal device to use the network service; and
changing a policy of a network service of the second terminal device, where the second terminal device and the first terminal device have accessed the first network, and the network service is provided by the first network.

In this implementation, changing the policy of the network service of the first terminal includes: adding another terminal to use the network service of the first terminal; or for the second terminal that has accessed the first network in which the first terminal is located (that is, both the first terminal and the second terminal have accessed the first network), supporting the first terminal in changing the policy of the network service of the second terminal. This helps the first terminal flexibly control use of the dedicated network service of the first terminal.

With reference to the first aspect, in some implementations of the first aspect, the first request message further carries information about the second terminal device, the first response message further includes token information of the second terminal device and/or the policy of the network service provided by the first network for the second terminal device, the token information is used for identity identification or verification for the second terminal device to use the network service provided by the first network, and the first network is a network in which the first terminal device is located (or the first network is a network providing the network service of the first terminal device).

In this implementation, the first terminal changes the policy of the network service of the first terminal, to add the second terminal to use the network service of the first terminal. In a process of changing the policy of the network service of the first terminal, the network side generates the token information for the second terminal, so that the second terminal subsequently performs identity identification or verification when requesting the network service allowed to be used by the first terminal, and the network side can perform identity identification or verification on a terminal that requests to use the network service of the first terminal. In addition, identity identification or verification is performed based on the token, so that identification or verification efficiency and security can be improved.

With reference to the first aspect, in some implementations of the first aspect, the method further includes:
sending, to the second terminal device based on the first response message, the token information and/or the policy of the network service provided by the first network for the second terminal device.

Optionally, the first request message further includes information about the first network, for example, an identifier of the first network.

In this implementation, the network side adds, based on the request of the first terminal, the second terminal to use the network service of the first terminal, and sends, to the second terminal device, the policy of the network service provided by the first network for the second terminal. Subsequently, the second terminal may request, based on the policy of the network service provided by the first network for the second terminal, to use the corresponding network service. This facilitates sharing or flow of the network service between terminals.

With reference to the first aspect, in some implementations of the first aspect, the first network element is a network service function NSF or a user network control function UNCF (for example, an application server AF of a data network), and the first request message is used to request to change the network service of the first terminal device.

Optionally, in this implementation, the first terminal requests the network service function or the user network control function to change the network service of the first terminal. The network service function or the user network control function sends a policy change notification message to the policy control function based on the request of the first terminal. The policy control function changes a value of a corresponding parameter in the policy of the network service of the first terminal based on the policy change notification message, to change the network service of the terminal device. This provides another feasible solution for the first terminal to change the network service of the first terminal.

With reference to the first aspect, in some implementations of the first aspect, changing the network service of the first terminal device includes one or more of the following cases:
adding a second terminal device to use the network service; and
changing a network service used by the second terminal device, where the network service used by the second terminal device is provided by a first network, and the second terminal device and the first terminal device have accessed the first network.

Based on this implementation, the first terminal may request to change the network service of the first terminal, and share the network service of the first terminal with another terminal (for example, the second terminal) for use. In addition, for the second terminal that has accessed the first network in which the first terminal is located, the first terminal is supported in changing the network service of the second terminal (for example, changing some parameter information). This helps the first terminal flexibly control another terminal to use a network service of the another terminal (namely, the first terminal).

For technical effect of the method in any one of the second aspect to the fourth aspect or any implementation of the method in any one of the second aspect to the fourth aspect, refer to descriptions of technical effect of corresponding technical solutions in the first aspect. Details are not described again.

According to a second aspect, a method for providing a network service is provided. The method is applied to a first network element (for example, a network device, as an example, a policy control function), or a chip, a chip system, a hardware circuit, a software module, a combination of a hardware circuit and a software module, or the like installed in the first network element. For example, the first network element is a UE-level PCF (for example, referred to as a UE PCF or a PCF for UE), a network slice-level PCF (for example, referred to as a slice PCF or a PCF for slice), a subnet-level PCF (for example, referred to as a sub-network PCF or a PCF for sub-network), a network service-level PCF (for example, referred to as a service PCF or a PCF for service), a UNCF, or the like. The method includes:
receiving a first request message from a first terminal device, where the first request message is used to request to change a policy of a network service used by the first terminal device, and the first request message carries information for changing the policy of the network service; and
sending a first response message for the first request message to the first terminal device.

According to the technical solution provided in this application, the first network element receives, from the first terminal, the request for changing the policy of the network service, where the request carries the information used to change the policy of the network service; and sends the corresponding response, so that the first terminal can flexibly change the network service of the first terminal.

With reference to the second aspect, in some implementations of the second aspect, the method further includes:
sending a second request message to a second network element based on the first request message, where the second request message is used to request to change the policy of the network service of the first terminal device; and
receiving a second response message for the second request message from the second network element.

Optionally, the second response message indicates that a request for changing the policy of the network service used by the first terminal device is accepted, and the second response message carries a change result of the policy of the network service of the first terminal device; and
the first response message further carries the change result.

Therefore, the first network element may change the policy of the network service or the network service of the first terminal based on the request of the first terminal by interacting with another network element.

Optionally, the method further includes:
sending a response message a to the first terminal device, where the response message a indicates that the request for changing the policy of the network service of the first terminal device is rejected, and the response message a includes a rejection cause value.

Optionally, before sending the response message a to the first terminal device, the method further includes:
authenticating the request corresponding to the first request message, and failing in authentication.

Optionally, in some implementations of the second aspect, changing the policy of the network service used by the first terminal device includes one or more of the following cases:
adding a second terminal device to use the network service; and
changing a policy of a network service of the second terminal device, where the second terminal device and the first terminal device have accessed a first network, and the network service is provided by the first network.

With reference to the second aspect, in some implementations of the second aspect, the first request message further carries information about the second terminal device, the first response message further includes token information of the second terminal device and/or the policy of the network service provided by the first network for the second terminal device, and the token information is used for identity identification or verification for the second terminal device to use the network service provided by the first network.

With reference to the second aspect, in some implementations of the second aspect, the method further includes:
sending a third response message to the second terminal device, where the third response message includes the token information of the second terminal device and/or the policy of the network service provided by the first network for the second terminal device.

According to a third aspect, a method for providing a network service is provided. The method is applied to a third network element or a fourth network element, or a chip, a chip system, a hardware circuit, a software module, a combination of a hardware circuit and a software module, or the like installed in the third network element or the fourth network element. For example, the third network element may be a network service function, for example, an NSF in 5G, and the fourth network element may be a user network control function, for example, may be a UNCF for short. For details, refer to descriptions in embodiments. The method includes:
receiving a first request message from a first terminal device, where the first request message is used to request to change a network service of the first terminal device, and the first request message includes parameter information that is of the network service and that needs to be changed; and
sending a second request message to a first network element or a second network element, where the second request message is used to request to change a policy of the network service of the first terminal device.

With reference to the third aspect, in some implementations of the third aspect, the method further includes:
receiving a second response message for the second request message from the first network element or the second network element, where the second response message carries a change result of the policy of the network service of the first terminal device.

With reference to the third aspect, in some implementations of the third aspect, the method further includes:
sending a first response message for the first request message to the first terminal device based on the second response message, where the first response message carries the change result.

With reference to the third aspect, in some implementations of the third aspect, the second request message carries a first service policy, and the second request message is used to request to modify the policy of the network service of the first terminal device to the first service policy; and the second response message carries a second service policy, and the second service policy is a policy of the network service provided by a first network for the first terminal device.

With reference to the third aspect, in some implementations of the third aspect, changing the network service of the first terminal device includes at least one of the following cases:
adding a second terminal device to use the network service of the first terminal device; and
changing a network service of the second terminal device, where the second terminal device and the first terminal device have accessed the first network, and the network service is provided by the first network.

With reference to the third aspect, in some implementations of the third aspect, the first request message and the second request message carry information about the second terminal device, the second response message for the second request message carries token information of the second terminal device and/or the policy of the network service provided by the first network for the second terminal device, and the token information is used for identity identification or verification for the second terminal device to use the network service provided by the first network.

According to a fourth aspect, a method for providing a network service is provided. The method is applied to a second terminal device, for example, a terminal device, or a chip, a chip system, a hardware circuit, a software module, a combination of a hardware circuit and a software module, or the like installed in the terminal device. The method includes:
receiving a first message, where the first message includes a policy of a network service provided by a first network for the second terminal device, and the first network further provides the network service for the first terminal device; and
sending a network service request to a network service function of the first network based on the first message, where the network service request is used to request the network service provided by the first network for the second terminal device.

With reference to the fifth aspect, in some implementations of the fifth aspect, the first message further includes token information, the token information is used for identity identification or verification for the second terminal device to use the network service provided by the first network, and the network service request carries the token information.

Optionally, the method according to any one of the first aspect to the fourth aspect and the possible implementations of the first aspect to the fourth aspect may be performed by a network element, or may be performed by a chip or a circuit having a corresponding function of the network element. This is not limited in this application. An example in which the network element performs the corresponding method is used for description in this specification.

Optionally, the network element may be replaced with a device, an entity, a network entity, a communication device, a functional module, a communication node, or the like.

According to a fifth aspect, a communication apparatus is provided. The communication apparatus includes at least one processor. The at least one processor is coupled to at least one memory, and the at least one processor is configured to execute a computer program or instructions stored in the at least one memory, so that the communication apparatus performs the method according to any one of the first aspect to the fourth aspect or any implementation of any aspect.

According to a sixth aspect, a chip is provided. The chip includes a processor and a communication interface. The communication interface is configured to receive to-be-processed information and/or data, and send the to-be-processed information and/or data to the processor, and the processor is configured to process the to-be-processed information and/or data, so that a communication apparatus in which the chip is installed performs the method according to any one of the first aspect to the fourth aspect or any implementation of any aspect.

According to a seventh aspect, a computer-readable storage medium is provided. The computer-readable storage medium stores computer instructions; and when the computer instructions are run on a computer, the method according to any one of the first aspect to the fourth aspect or any implementation of any aspect is implemented.

According to an eighth aspect, a computer program product is provided. The computer program product includes computer program code. When the computer program code is run on a computer, the method according to any one of the first aspect to the fourth aspect or any implementation of any aspect is implemented.

According to a ninth aspect, a wireless communication system is provided. The wireless communication system includes a network element that performs the method according to any one of the first aspect to the fourth aspect.

### BRIEF DESCRIPTION OF DRAWINGS

FIG. 1 is a diagram of a communication system 100 to which embodiments of this application are applicable;
FIG. 2 is a diagram of a method for opening, by using a network slice, a terminal to change a network policy or a service parameter;
FIG. 3 is a schematic flowchart of a method 300 for providing a network service according to this application;
FIG. 4 is a schematic flowchart of a method 400 for providing a network service according to this application;
FIG. 5 is a schematic flowchart of a method 500 for providing a network service according to this application;
FIG. 6 is a schematic flowchart of a method 600 for providing a network service according to this application;
FIG. 7 is a schematic flowchart of a method 700 for providing a network service according to this application;
FIG. 8 is a schematic flowchart of a method 800 for providing a network service according to this application;
FIG. 9 is a diagram of a communication apparatus according to this application; and
FIG. 10 is another diagram of a communication apparatus according to this application.

### DESCRIPTION OF EMBODIMENTS

The following describes technical solutions of embodiments in this application with reference to accompanying drawings.

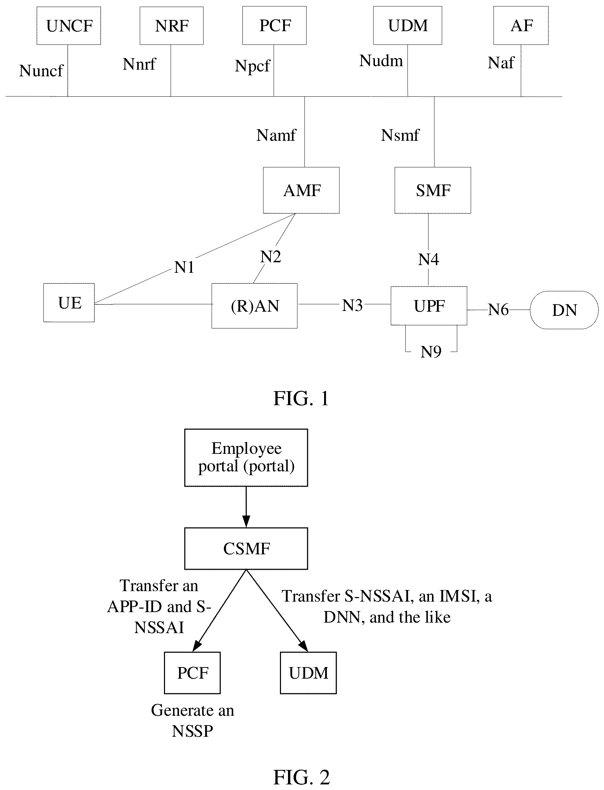

FIG. 1 is a diagram of a communication system 100 to which embodiments of this application are applicable. As shown in FIG. 1, network elements included in the communication system 100 and functions of the network elements are described as follows:

A radio access network (radio access network, RAN) mainly corresponds to an access network device in this application, and is responsible for functions such as radio resource management, uplink/downlink data classification, quality of service (quality of service, QoS) application, signaling processing completed with a control plane network element, and data forwarding completed with a user plane function network element. For example, the access network device may be a base station, a broadband network gateway (broadband network gateway, BNG), an aggregation switch, a non-3GPP access device, or the like. The base station may include base stations in various forms, for example, a macro base station, a micro base station (also referred to as a small cell), a relay station, an access point, or the like. This is not specifically limited in embodiments of this application. A device used by a terminal to access a core network is collectively referred to as an access network device in this specification. For example, the access network device may be an evolved universal terrestrial radio access network (evolved universal terrestrial radio access network, E-UTRAN) device in a 4th generation (4th generation, 4G) network, a next generation RAN (next generation radio access network, NG-RAN) device in a 5th generation (5th generation, 5G) network, or the like.

An access and mobility management function (access and mobility management function, AMF) is mainly used for access management.

A unified data management (unified data management, UDM) is responsible for user subscription data management, user identifier management, and the like.

A user equipment (user equipment, UE) may be referred to as a terminal device (terminal device). Usually, this type of terminal device needs to be registered in an operator network before using a network provided by an operator, for example, a mobile phone inserted with a subscriber identity module (subscriber identity module, SIM) card, or an internet of things device using an embedded SIM (embedded SIM, eSIM) card.

A session management function (session management function, SMF) is used to establish and manage a session for a user, and configure a data packet forwarding rule, a QoS processing rule, and the like for a user name function.

A policy control function (policy control function, PCF) has functions such as providing policy information for a control plane function, where the policy information may be a user policy, an access and mobility management policy, a session management policy, or the like, for example, sending UE policy information to a UE, sending an access and mobility management policy of the UE to the AMF, or sending a session management policy to the SMF.

A network service function (network service function, NSF) is a service function in the network. For example, when the NSF provides a session management service, the NSF may be an SMF. When providing another network service, the NSF may be another network function. Alternatively, the NSF may also be referred to as a network function (network function, NF).

An application function (application function, AF) may be an application server, may belong to an operator, or may belong to a third party.

A user network control function (user network control function, UNCF) is mainly responsible for managing a life cycle of a user network, may configure or change a service parameter of the user network, or control a behavior of using a network service by the user, for example, control permission of accessing the user network.

In addition, for specific interfaces between the foregoing network elements, refer to FIG. 1. For example, an N1 interface is a communication interface between the UE and the AMF, and is configured to transmit control plane signaling between the core network and the UE; an N2 interface is a communication interface between the RAN and the AMF; an N3 interface is a data transmission interface between the RAN and the UPF; an N4 interface is a communication interface between the SMF and the UPF, and is configured to transmit configuration information of a user plane session; and an N6 interface is a data transmission interface between the UPF and a data network (data network, DN). Other interfaces shown in FIG. 1 are service-based interfaces of corresponding network elements. NFs may request a service of an NF from the corresponding NF by invoking a service-based interface. For example, an Npcf interface is a service-based interface of the PCF, and another NF may request a service of the PCF from the PCF through the Npcf interface. Another service-based interface is similar. Details are not described again.

It should be noted that the foregoing network architecture applicable to embodiments of this application is merely an example for description, and the network architecture applicable to this application is not limited thereto. Any network architecture that can implement functions of the foregoing network elements is applicable to this application. In other words, the network architecture described in this application is intended to describe the technical solutions of this application more clearly, and does not constitute a limitation on the technical solutions provided in this application. A person of ordinary skill in the art may learn that with evolution of a network architecture or emergence of a new service scenario, the technical solutions provided in this application are also applicable to a similar technical problem.

In addition, names of network elements, names of interfaces between network elements, names of messages/information, and the like in this application are merely examples. In a future communication network, these network elements and messages/information may also have other names, provided that the network elements, messages/information, and the like have same or similar functions as the network elements, messages/information, and the like described in this application, and achieve same or similar technical objectives; and these network elements and messages/information all shall fall within the technical scope of this application. For example, in a 6G network, some or all of the foregoing network elements may still use names in 4G/5G, or may use new names.

A non-connection service in this application includes but is not limited to any one of a task service, a computing service, a data service, a trusted service, and an AI service.

It should be understood that the foregoing listed non-connection service is merely an example, and may further include more new services that can be provided by a future communication network. This is not limited.

As an example, the task service may be a network service that implements resource collaboration and service QoS guarantee of a plurality of types of resources and a plurality of communication nodes in a form of a "task". A communication network changes from a single dimension of a connection service to a dimension of encapsulating and providing new services of a connection service, a computing service, a data service, an intelligence service, and a trust service in a form of a task, to implement service level agreement (service level agreement, SLA) guarantee of various services such as an AI service, a sensing service, a computing service, and a data service, and further expand application scenarios of the communication network.

The computing service may mean that a node in a network infrastructure may further provide an additional computing function in addition to a basic connection service, to perform deep integration of communication and computing, for example, sensing and computing a status of a communication resource in real time, and performing collaborative control on a communication resource and a computing resource, to meet QoS requirements such as an end-to-end ultra-low latency, data security protection, and sustainable energy saving in a dynamic complex wireless network environment.

The data service is intended to provide data as a service, for example, may include capturing or collection of raw data, data preprocessing, data storage, data privacy and security protection, data sharing or transaction, data source tracing, data analysis, and a data dictionary.

The trusted service may be providing a trusted function externally in a form of a service, and may include a blockchain service, a remote attestation service, a privacy protection service, and the like.

The AI service can perform AI training or inference in the network to provide intelligent capabilities that adapt to different application scenarios.

A future mobile network needs to open more network control capabilities to a terminal, so that the terminal can more flexibly customize or change a network service that can be used by the terminal.

The current 5G mobile network allows a group of logically independent networks to be established on a common physical infrastructure. These logically independent networks (namely, network slices) may be respectively designed as networks that meet specific service requirements. The network slice may provide a dedicated connection network for the UE, and allows a user of the network slice to configure, by using a management plane, a service parameter for network handover and information about the user that can use the network slice. FIG. 2 is a diagram of a method for opening, by using a network slice, a UE to change a network policy or a service parameter. As shown in FIG. 2, an employee portal (portal) may be a client provided by an operator for a user of a network slice or a web page for managing the network slice. A communication service management function (communication service management function, CSMF) is responsible for converting a communication service related requirement into a network slice related requirement and parameter, and transfers information such as an APP-ID and an S-NSSAI to a PCF and information such as an S-NSSAI, an IMSI, and a DNN to a UDM. Further, the PCF generates a network slice selection policy (network slice selection policy, NSSP), and sends the NSSP as a part of a rule of a UE route selection policy (UE route selection policy, URSP) to a UE through an AMF. The UE establishes a correspondence between a service and single network slice selection assistance information (single network slice selection assistance information, S-NSSAI) by using the URSP. There are many disadvantages when a network policy or a network service parameter of the terminal device is changed based on the method shown in FIG. 2. For example, a change of the network slice is related to an access network, a transport network, and a core network, has a large impact range, and usually requires long processing time. In addition, the method is changed in a management plane configuration manner, and is actually manually operated. Consequently configuration efficiency is low and this is inflexible. In addition, a change of the network policy or the network service parameter affects a change of subscription information of the terminal device, and processing is complex. For another example, in an existing 5G mobile network, a terminal device and a network service are basically in a one-to-one relationship, and one terminal device usually cannot share a network service of the terminal device with another terminal device for use. In addition, one terminal device can change only a network service parameter related to a service of the terminal device, and cannot change a network service parameter of another terminal device. This is not conducive to sharing, between terminal devices, a non-connection service that can be provided by a future mobile network.

Based on the foregoing technical status, this application provides a method for changing a network service, so that a terminal device can flexibly change a network service used by the terminal device. In other words, according to the technical solutions of this application, more network control capabilities may be opened to the terminal device, so that the terminal device can flexibly customize or change the network service used by the terminal device. Therefore, one terminal device may further flexibly share a network service used by the terminal device with another terminal device for use.

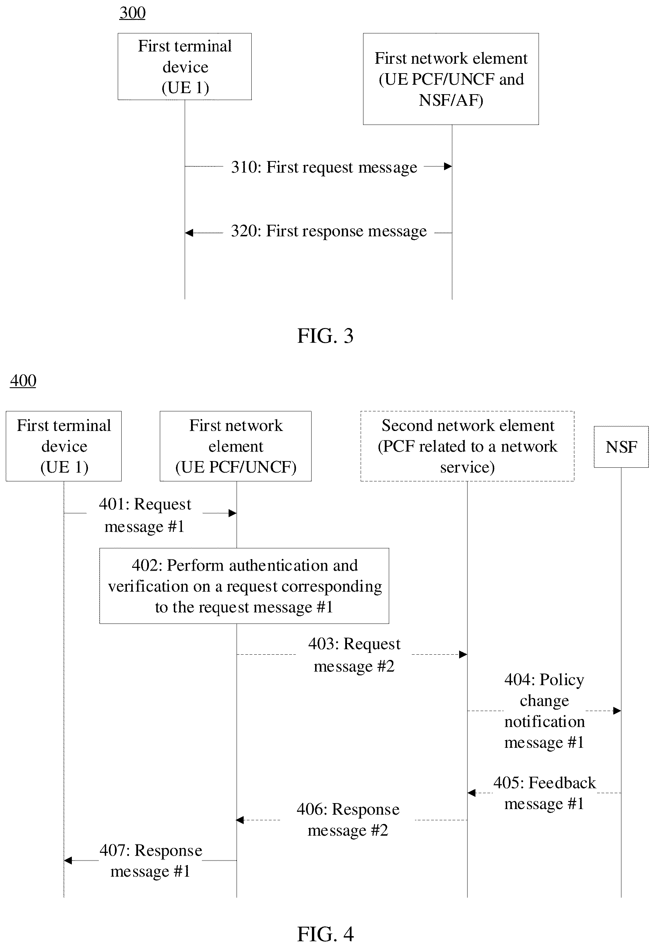

FIG. 3 is a schematic flowchart of a method 300 for providing a network service according to this application. The method 300 may be an example of changing a policy of a network service of a terminal device.

310: A first terminal device sends a first request message to a first network element, and the first network element receives the first request message from the first terminal device. Correspondingly, the first network element receives the first request message from the first terminal device.

The first request message is used to request to change a policy of a network service used by the first terminal device, and the first request message carries information used to change the policy of the network service; or the first request message is used to request to change a network service used by the first terminal device, and the first request message carries parameter information that is of the network service and that needs to be changed.

The first terminal device sends, to the first network element, the first request message for changing the policy of the network service, or sends, to the first network element, the first request message for changing the network service. After receiving the first request message, the first network element changes the policy of the network service of the first terminal device or the network service by performing corresponding processing on a network side. The following embodiments describe the two solutions in detail.

320: The first network element sends a first response message for the first request message to the first terminal device. Correspondingly, the first terminal device receives the first response message from the first network element.

Optionally, the first response message indicates a response of the first network element to a request corresponding to the first request message. Specifically, the first response message may indicate that the first network element accepts or rejects the request corresponding to the first request message. As an example, when the first network element accepts the request corresponding to the first request message, the first response message may further carry the changed policy of the network service, the changed parameter information of the network service, or the like. When the first network element rejects the request corresponding to the first request message, the first response message may further carry a rejection cause value.

As an example, in an implementation, the first network element is a UE-level PCF (for example, referred to as a UE PCF or a PCF for UE), a network slice-level PCF (for example, referred to as a slice PCF or a PCF for slice), a subnet-level PCF (for example, referred to as a sub-network PCF or a PCF for sub-network), a network service-level PCF (for example, referred to as a service PCF or a PCF for service), a UNCF, or the like, and the first request message is used to request to change the policy of the network service of the first terminal device. In another implementation, the first network element may be an NSF, a UNCF, or an AF, and the first request message is used to request to change the network service of the first terminal device.

That is, based on different first network elements, the first request message may be used to request to change the policy of the network service, or may be used to request to change the network service. Specific procedures may be different, and are separately described below.
(1) The first network element is a policy control function or a user network control function of the first terminal device, and the first request message is used to request to change the policy of the network service used by the first terminal device.

In other words, a UE sends, to a UE PCF/UNCF, a request for changing a policy of a network service of the UE, to change the policy of the network service used by the UE. The following provides descriptions with reference to FIG. 4. In the method embodiment in FIG. 4, an example in which the first network element is the UE PCF/UNCF is used for description. Optionally, the first network element may be replaced with a slice PCF/sub-network PCF/service PCF or the like, or the first network element may be a network element integrating functions of one or more of the foregoing PCFs. For example, the first network element is a network element integrating functions of the UE PCF and the service PCF (or the UE PCF and the service PCF are integrated as the first network element). This is not limited.

FIG. 4 is a schematic flowchart of a method 400 for providing a network service according to this application.

401: A first terminal device sends a request message #1 to a first network element, where the request message #1 is used to request to change a policy of a network service of the first terminal. Correspondingly, the first network element receives the request message #1 from the first terminal device.

Optionally, changing the policy of the network service includes one or more of the following:
adding and/or deleting a terminal device using the network service;
adding and/or deleting a network device providing the network service;
changing use permission of the terminal device using the network service;
changing the policy of the network service used by the terminal device using the network service; and
changing subscription information of a status of using the network service by the terminal device using the network service.

As an example, the foregoing use permission may include one or more of the following:
information about an application and/or a website that are/is allowed to be used;
information about an application and/or a website that are/is prohibited from being used; and
allowing the terminal device using the network service to use a network device in a first network, where the network service is provided by the first network.

The foregoing "change" operation may include addition, deletion, update, and the like.

As an example, the policy of the network service may further include one or more of the following:
duration of the network service, data usage of the network service, quality of service (quality of service, QoS) of the network service, that a location of the terminal device using the network service is in a preset location range, and the like.

Optionally, information carried in the first request message includes information used to change the policy of the network service, for example, one or more of the following:
(1) information about the first network corresponding to the network service that a UE 1 requests to change, for example, identification information of the first network;
(2) information about the network service that requests to be changed, where for example, if a policy of a connection service is requested to be changed, the request message #1 carries identification information of a session; if a data service is requested to be changed, the request message #1 carries identification information and/or address information of a storage device; if a computing service is requested to be changed, the request message #1 carries information about a computing resource (for example, a cloud terminal identifier or a cloud computing account); or if a task service is requested to be changed, the request message #1 carries identification information or the like of a task; and
(3) an operation of changing the policy of the network service, for example, adding and/or deleting the terminal device using the network service of the UE 1, adding and/or deleting the network device providing the network service, changing the use permission of the terminal device using the network service (for example, allowing or prohibiting an accessible application/website), changing a device in the first network that can be used by the terminal device using the network service, and changing the subscription information of the status of using the network service by the terminal device (for example, unsubscription or adding new subscription).

402: Optionally, the first network element performs, based on the request message #1, authentication on a request corresponding to the request message #1.

For example, the first network element determines, based on one or more of a local policy of an operator, subscription information of the first terminal device, the policy of the network service of the first terminal device, and the like, whether the first terminal can be allowed to change the policy of the network service. The first network element may obtain the subscription information of the first terminal and/or the policy of the network service based on a local configuration or by interacting with a UDM/unified data repository (unified data repository, UDR), to perform authentication on the request corresponding to the first request message.

It should be understood that performing authentication on the request corresponding to the request message #1 may be performing authentication on a request for changing the policy of the network service of the first terminal device, and may include a plurality of specific implementations. For example, performing authentication on an identity of the first terminal device to determine whether the first terminal device is allowed to change the policy of the network service of the first terminal device; or if the first terminal device is a terminal device that is allowed to change the policy of the network service of the first terminal device, but there is a limitation on the network service that can be changed, it needs to be determined whether the policy of the network service that the first terminal device requests to change is allowed. For example, if the network service used by the first terminal device includes an AI service, a data service, and a computing service, but change permission opened by a network side to the first terminal device is limited to the data service, the authentication fails if the first terminal device requests to change a policy of the computing service; or the authentication succeeds if the first terminal device requests to change a policy of the data service. Therefore, in this embodiment of this application, unless otherwise specified, allowing or prohibiting the first terminal device to change the policy of the network service is also specific to the network service requested by the first terminal device. In other words, allowing or prohibiting the first terminal device to change the policy of the network service generally means allowing or prohibiting the first terminal device to change the policy, of the network service, requested to be changed in the request message #1.

If the authentication succeeds, the first terminal is allowed to change the policy of the network service; or if the authentication fails, the first terminal is prohibited from changing the policy of the network service. Optionally, when the authentication fails, the first network element sends a response message a to the first terminal device, where the response message a indicates that changing the policy of the network service of the first terminal device is rejected. Optionally, the response message a may include a rejection cause value. For example, the first terminal device does not have permission to change the network service; or a current location of the first terminal device is not in a specified geographical range, and the response message a may further include another rejection cause value. This is not limited.

The following embodiments mainly describe a case in which the authentication succeeds. If the authentication succeeds, subsequent steps continue to be performed.

403: Optionally, the first network element sends a request message #2 to a second network element, where the request message #2 is used to request to change the policy of the network service used by the first terminal device. Correspondingly, the second network element receives the request message #2 from the first network element.

The second network element is a PCF related to the network service. For example, the second network element may be referred to as a service PCF (service PCF or PCF for service) in this embodiment of this specification.

In other words, when the authentication performed on the request of the first terminal device succeeds, the first network element sends, to the second network element, the request for changing the policy of the network service of the first terminal device.

There may be a plurality of specific implementations in which the first network element sends, to the second network element, the request for changing the policy of the network service element. The following provides three implementations as examples.

### Manner 1

An association relationship may be pre-established between the first network element and the second network element, and the first network element determines, based on the association relationship, the second network element corresponding to the network service that the first terminal device requests to change. In Manner 1, the first network element may establish an association relationship with a plurality of second network elements, and the plurality of second network elements may be associated with different network services. For example, the plurality of second network elements may include a second network element related to session policy control, a second network element related to an access and mobility management policy, and the like. As an example, if the request message #1 is used to request to change the policy of the connection service, the first network element sends, to the second network element related to the session policy control based on the pre-established association relationship, a request for changing the policy of the connection service.

### Manner 2

The first network element finds, through querying, the second network element corresponding to the network service that requests to be changed. For example, the first network element performs querying in a network service discovery manner. 5G is used as an example. The first network element may find, through querying by an NRF or a binding support function (binding support function, BSF), the second network element corresponding to the network service.

### Manner 3

The first network element may forward, through an intermediate node, the request message for changing the policy of the network service. For example, policies of the network service used by the first terminal device are all stored in a storage function, for example, a UDR in 5G. When providing a policy of the network service for the terminal, the second network element related to the network service may obtain a corresponding policy of the network service from the storage function, and subscribe to a change from the storage function. If the first network element changes, based on the request message #1 from the first terminal device, the policy of the corresponding network service in the storage function, the storage function notifies, based on subscription information of the second network element related to the network service, the second network element of a change status of the policy of the network service of the first terminal device, for example, sends changed policy information to the second network element. In this way, the first network element can also send, to the second network element, the request for changing the policy of the network service of the first terminal device.

In Manner 3, compared with Manner 1 and Manner 2, the first network element does not need to be connected to second network elements corresponding to a plurality of network services. When the second network element are changed, interaction between the second network element and the first network element is reduced, and signaling exchange overheads can be reduced. In addition, because the policy information of the network service of the terminal is backed up in the storage function, network robustness is improved.

404: The second network element sends a policy change notification message #1 to a network service function based on the request message #2. Correspondingly, the network service function receives the policy change notification message #1 from the second network element. The policy change notification message #1 indicates to change the policy of the network service of the first terminal device.

For ease of description, assuming that the request message #1 is used to request to change a policy of a first network service (an example of the network service, for example, a computing service or a data service), the network function service network element changes, based on the policy change notification message #1, a rule corresponding to the change of the policy of the first network service, and then returns a feedback message to the second network element.

Usually, the second network element (namely, a PCF related to the network service) provides the policy of the network service for the network service function. The network service function generates a service rule based on the policy of the network service. Then, when providing the network service for the UE, the network service function provides the corresponding network service according to the service rule. A connection service is used as an example. If the terminal device applies for changing QoS of the connection service, for example, reducing a transmission bandwidth/rate of a service flow (for example, reducing a transmission bandwidth of a video in an app), the second network element correspondingly changes a QoS parameter in a policy of the connection service, and then sends a session policy change notification message to an NSF (which may indicate an SMF if the connection service is used). After receiving the changed session policy, the NSF (which may be specifically the SMF herein) correspondingly changes a QoS processing rule of the service flow, and configures the QoS processing rule for a user plane function (user plane function, UPF), so that the UPF forwards a specific service flow (for example, a service flow of the video in the app) according to a new QoS rule (that is, reduces the transmission rate). In addition, if another service is related to the network, this method is also applicable. For example, when the terminal device needs to change an upper limit of a compression rate of stored data by a data service (for example, change video compression from 1080P to 720P for storage, or change the upper limit of the data compression rate from 80% to 50%), the terminal device may send the upper limit of the compression rate to the second network element, and then the second network element sends a policy change notification message to the NSF (for example, a network function for processing data compression or a data service control function), where the policy change notification message carries the upper limit of the compression rate. Then, the NSF performs corresponding compression processing on the data according to a new service rule (namely, a service rule corresponding to a target compression rate), so that the data does not exceed the upper limit of the compression rate. If the service is a computing service, the terminal device may modify a computing resource used for data computing, for example, modify a quantity of CPUs, a quantity of memories, and a quantity of processes that participate in computing. The second network element sends a policy change notification to the NSF (namely, a computing service control function or an execution function) based on a request of the terminal device, and the NSF modifies a corresponding rule based on the policy change notification.

405: The network service function sends a feedback message #1 to the second network element, where the feedback message #1 indicates that the policy of the network service of the first terminal device has been changed or an execution rule of the network service has been correspondingly changed based on the updated policy of the network service. Correspondingly, the second network element receives the feedback message #1 from the network service function.

406: The second network element sends a response message #2 for the request message #2 to the first network element based on the feedback message #1, where the response message #2 may carry the changed policy of the network service. Correspondingly, the first network element receives the response message #2 from the second network element.

The first network service in step 404 above is used as an example. The response message #2 may carry the changed policy of the first network service.

407: The first network element sends a response message #1 for the request message #1 to the first terminal device based on the response message #2. Correspondingly, the first terminal device receives the response message #1 from the first network element.

Optionally, in this embodiment of this application, the first network element and the second network element may be deployed in a same device or a same logical module, or functions of the first network element and the second network element are not distinguished (that is, the first network element is deployed in the network, and in addition to a function of the first network element, the first network element further has a function of the second network element; or the function of the first network element and the function of the second network element are integrated into one network element as the first network element in this embodiment of this application). In this case, step 403 and step 406 may be an internal implementation of the first network element. In addition, messages (for example, the request message #1 in step 401 and the response message #1 in step 407) between the first terminal device and the first network element may be forwarded by another network element (for example, an AMF). This is not limited.

According to the method provided in FIG. 4, the terminal device requests to change the policy of the network service of the terminal device, and the network side changes the policy of the network service of the terminal device based on the request of the terminal device, so that the terminal device can flexibly change the policy of the network service of the terminal device.

As shown above, changing the policy of the network service of the first terminal device may include adding and/or deleting the terminal device using the network service of the first terminal device, or changing a policy of a network service of another terminal device using the network service of the first terminal device. To distinguish from the first terminal device to clearly describe the solution, the another terminal device related to changing the policy of the network service of the first terminal device is referred to as a second terminal device below. As an example, changing the policy of the network service of the first terminal device includes: adding the second terminal device to use the network service of the first terminal device, in other words, sharing the network service used by the first terminal device with the second terminal device for use; or deleting the second terminal device from one or more terminal devices using the network service of the first terminal device, that is, canceling permission of the second terminal device to use the network service of the first terminal device; or changing the policy of the network service used by the second terminal device for the second terminal device using the network service of the first terminal device, or the like. Optionally, that the second terminal device uses the network service of the first terminal device includes that the second terminal device may use one or more of the network service of the first terminal device. This is not limited. For example, the network service used by the first terminal device includes a computing service, a data service, and an AI service, and the second terminal device may use all the foregoing network services, or a part of these network services, for example, share only the computing service with the second terminal device for use.

As described above, the second terminal device is used in the embodiments of adding and/or deleting the second terminal device or changing the policy of the network service of the second terminal device. Adding the second terminal device to use the network service of the first terminal device is used an example below, to describe a case in which the second terminal device is used. Based on the descriptions, a person skilled in the art may also extend the technical solution of this application to a case of deleting the second terminal device, changing the policy of the network service of the second terminal device, or the like.

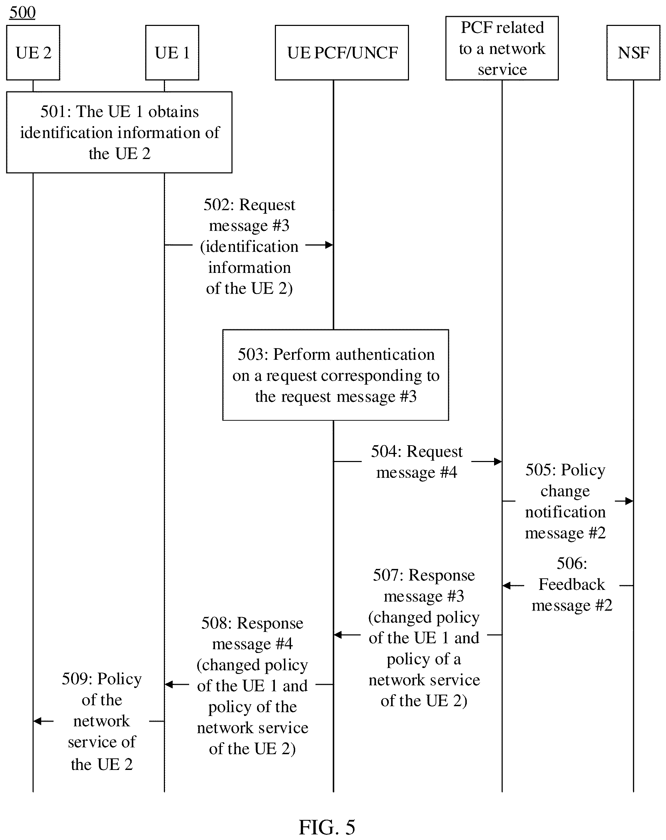

With reference to FIG. 5, the following provides a method procedure in which the first terminal device requests to change the policy of the network service when the second terminal device is added to use the network service of the first terminal device.

FIG. 5 is a schematic flowchart of a method 500 for providing a network service according to this application.

501: A UE 1 obtains identification information of a UE 2.

For example, the identification information of the UE 2 may include an identity, address information, and the like of the UE 2. When the UE 2 needs to use a network service of the UE 1, the UE 2 may provide the identification information of the UE 2 to the UE 1 by using an application layer message, a signaling message, or another manner. For example, the UE 2 sends the identification information of the UE 2 to the UE 1 in a direct communication manner such as a proximity-based services communication 5 (proximity-based services communication 5, PC5) connection, Bluetooth, or Wi-Fi. Optionally, if the identification information of the UE 2 is a non-bottom-layer identifier, for example, a mobile phone number or an identity, the identification information of the UE 2 may alternatively be transferred in plaintext. For example, the identification information of the UE 2 is provided to a user of the UE 1 by using an oral expression (oral expression) of the user of the UE 2, so that the identification information of the UE 2 is input to the UE 1. For example, if the UE 2 is a home visitor of the UE 1, the user of the UE 2 may notify a user of the UE 1 of an identity code or an application account of the UE 2, to input the identity code or the application account to the UE 1.

502: The UE 1 sends a request message #3 to a UE PCF/UNCF, where the request message #3 is used to request to change a policy of a network service of the UE 1, where changing the policy of the network service of the UE 1 includes adding the UE 2 to use the network service of the UE 1, and the request message #3 carries the identification information of the UE 2. Correspondingly, the UE PCF/UNCF receives the request message #3 from the UE 1. It should be understood that the UE PCF in FIG. 5 is a UE1 PCF.

Optionally, the UE 1 may send the request message #3 to the UE PCF/UNCF in a plurality of manners. The following provides several examples.

For example, the UE 1 sends the request message #3 to the UE PCF/UNCF by using a control plane NAS message. Specifically, the UE 1 sends the request message #3 by using the NAS message through an access network, for example, a RAN or an N3IWF.

For another example, the UE 1 sends the request message #3 to the UE PCF/UNCF through forwarding of a proxy (proxy) function. The proxy function is, for example, an AMF in 5G or a mobility management entity (mobility management entity, MME) in 4G.

For another example, the UE 1 sends the request message #3 to the UE PCF/UNCF by using a user plane message. For example, after the UE 1 obtains address information of the UE PCF, the request message #3 is carried in a user plane data packet and sent by using the address information of the UE PCF as a destination address; or the UE 1 obtains address information used for interacting with a control plane network function, and then a UPF or another NF forwards a data packet to the UE PCF based on information (for example, information indicating the PCF) carried in the data packet. A manner in which the UE 1 obtains the address information of the UE PCF or obtains the address information used for interacting with the control plane network function may be locally configured by the UE 1, or delivered by an upper-layer application, or obtained from a network side, for example, obtained from the UE PCF or the another network function. In this implementation, the UE PCF may be a network function deployed on a control plane (where the user plane data packet may be forwarded by a user plane function to the UE PCF), a network function deployed on a user plane (which may be co-deployed with the user plane function), or a network function deployed in a data network (where a function is similar to that of an application server).

In addition, for information carried in the request message #3, refer to the descriptions in step 401 above. Details are not described again.

503: Optionally, the UE PCF/UNCF performs authentication on a request corresponding to the request message #3. If the authentication succeeds, the UE PCF continues to perform subsequent steps of the method 500.

For step 503, refer to the descriptions in step 402. Details are not described again.

504: The UE PCF/UNCF sends a request message #4 to a PCF related to the network service (which may also be denoted as a service PCF). Correspondingly, the PCF related to the network service receives the request message #4 from the UE PCF/UNCF.

The request message #4 further carries the information carried in the request message #3, including the identification information of the UE 2. For details, refer to the descriptions in step 502. Details are not described again.

Herein, the PCF related to the network service is a PCF responsible for the network service requested by the UE 2. For example, if the UE 1 adds the U2 to use a connection service of the UE 1, the UE PCF sends the request message #4 to a PCF responsible for session management ((session management, SM) PCF, or referred to as a PCF for session). The SM PCF is a PCF related to the connection service.

Optionally, in this embodiment, the UE PCF, the UNCF, and the PCF related to the network service may be deployed in a same device or a same logical module. In this implementation, interaction between the UE PCF/UNCF and the network-related PCF in FIG. 5 is an internal implementation of the device or the logical module.

505: The service PCF sends a policy change notification message #2 to an NSF, where the policy change notification message #2 carries the identification information of the UE 2. Correspondingly, the NSF receives the policy change notification message #2 from the service NSF.

The NSF changes, based on the policy change notification message #2, the policy of the network service of the UE 1, including adding the UE 2 to use the network service of the UE 1.

506: The NSF sends a feedback message #2 to the service PCF. Correspondingly, the service PCF receives the feedback message #2 from the NSF, where the feedback message #2 indicates that the change of the policy of the network service used by the UE 1 has been completed.

507: The service PCF directly or indirectly sends a response message #3 to the UE PCF/UNCF, where the response message #3 carries a change result (namely, the changed policy) of changing the policy of the network service used by the UE 1. In addition, the response message #3 further carries a policy of a network service provided by a first network for the UE 2. Correspondingly, the UE PCF/UNCF receives the response message #3 from the service PCF.

Optionally, the response message #3 further includes token information (for example, a token) of a second terminal device, and the token information is used for identity identification or verification for the UE 2 to subsequently use the network service provided by the first network. Alternatively, the token information is used for identity identification or verification for the UE 2 to use the network service of the UE 1. It should be understood that the network service used by the UE 1 is provided by the first network, and therefore the network service, if the UE 1, used by the UE 2 is also provided by the first network. In this implementation, the token information is generated by the service PCF. Optionally, the token information of the UE 2 may be generated by the UE PCF or the UE 1 and provided to the UE 2. This is not limited. It should be understood that if the token information is generated by the UE PCF or the UE 1, the response message #3 does not carry the token information, but may be provided to the UE 2 after the UE PCF or the UE 1 generates the token information. In the method 500, an example in which the token information is generated by the service PCF is used for description. After the token information of the UE 2 is generated, in addition to being provided to the UE 2, the token information needs to be further provided to a network function related to the network service that can be used by the UE 2, to indicate an identity or permission of the UE 2 for using the network service. For example, after generating the token information of the UE 2, the UE PCF synchronizes the token information to the service PCF or the NSF. Then, the UE 2 accesses the first network used by the UE 1 and provides the token information of the UE 2. The service PCF or the NSF may perform authorization and verification on the UE 2 for using the network service of the UE 1 based on the token information.

Optionally, the token information may be at a following granularity: a network granularity, a network service granularity, a user granularity, or the like. For example, if the token information is at the network granularity, the token information of the UE 2 may be bound to information about the first network (for example, an identifier of the first network) used by the UE 1. For another example, if the token information is at the network service granularity (or the service granularity), the token information of the UE 2 is bound to information about an available network service. For example, the UE 2 may use the connection service of the UE 1. In this case, the token information of the UE 2 is bound to an identifier of the connection service of the UE 1, or bound to a session identifier of the connection service. For another example, if the token information is at the user granularity, the token information of the UE 2 is bound to an identifier of the UE 1.

As an example, the network service, of the UE 1, that can be used by the UE 2 may be associated with the granularity of the token information. For example, if the token information is at a UE granularity, the UE 2 may use all network services that can be used by the UE 1; or if the token information is at a network granularity, the UE 2 may use all network services that can be provided by the first network; or if the token information is at a network service granularity, the UE 2 may use a network service bound to the token information. For example, if the token information is bound to a computing service, the UE 2 may use the computing service; or if the token information is bound to a computing service and an AI service, the UE 2 may use the computing service and the AI service.

508: The UE PCF/UNCF sends a response message #4 to the UE 1, where the response message #4 includes the change result of changing the policy of the network service used by the UE 1 and the policy of the network service provided by the first network for the UE 2. In addition, optionally, the response message #4 may further carry the token information of the UE 2. Correspondingly, the UE 1 receives the response message #4 from the UE PCF/UNCF.

The UE 1 obtains, based on the response message #4, the change result of the policy of the network service used by the UE 1. In addition, the UE 1 further performs step 509.

509: The UE 1 sends the policy of the network service of the UE 2 to the UE 2.

In step 507 to step 509, the UE PCF sends the policy of the network service of the UE 2 to the UE 2 through the UE 1. Optionally, the UE PCF sends the token information of the UE 2 to the UE 2 through the UE 1. This is only an implementation of returning, to the UE 2, the token information and the policy of the network service provided by the first network for the UE 2 after the first network authorizes the UE 2 to use the network service of the UE 1. There may be another implementation. For example, the UE PCF sends, to the UE 1 by using the response message #4, the change result of the policy of the network service used by the UE 1. In addition, the UE PCF directly sends a third response message to the UE 2. The third response message may carry the policy of the network service and the token information of the UE 2. In other words, the UE PCF directly provides the policy of the network service and the token information of the UE 2 to the UE 2. For another example, the UE PCF sends the policy of the network service of the UE 2 to the UE 2 through the UE 1, and the UE PCF sends the token information to the UE 2. In the foregoing two examples, this may be applicable to a case in which the token information of the UE 2 is generated by the UE PCF. In still another example, the UE PCF sends the policy of the network service of the UE 2 to the UE 2, and adds indication information a to the response message #4, where the indication information a indicates that the first network allows the UE 2 to use the network service of the UE 1. The UE 1 generates the token information of the UE 2 based on the indication information a, and provides the token information of the UE 2 to the UE 2. It should be understood that when the first network authorizes the UE 2 to use the network function of the UE 1, the policy of the network service and the token information of the UE 2 may be sent to the UE 2 in a plurality of manners. FIG. 5 is merely an example. In addition, the changed policy of the network service of the UE 1 and the changed policy of the network service of the UE 2, and the token information of the UE 2 may be sent in one or more messages. This is not limited.

According to the method in FIG. 5, one UE (for example, the UE 1) may flexibly change a policy of a network service of the UE, including sharing the network service of the UE with another UE (for example, the UE 2) for use, so that the network service can be flexibly shared between UEs.

(2) The first network element is an NSF, and the first request message is used to request to change the network service used by the first terminal device.

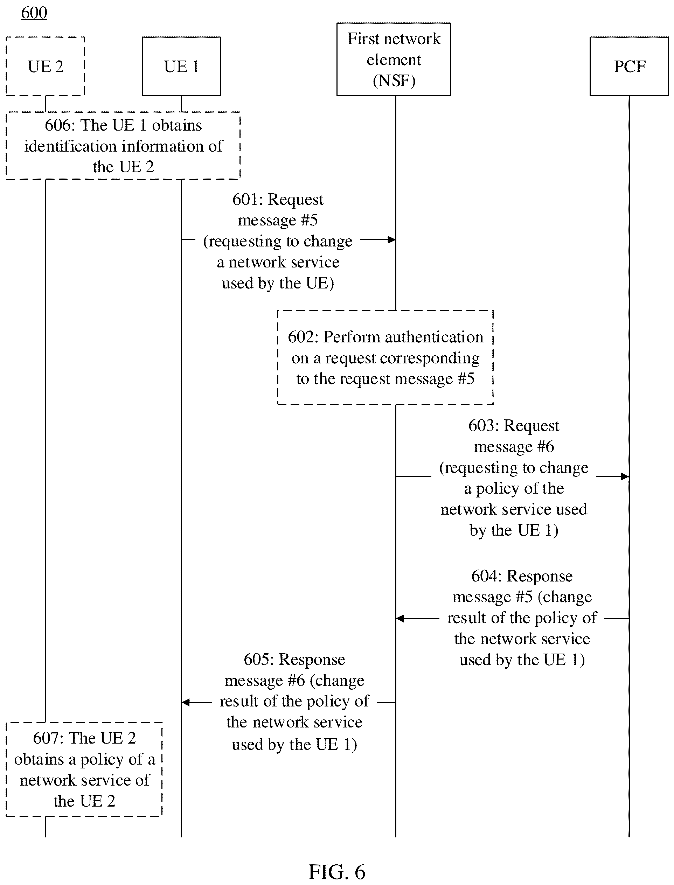

Specifically, the UE sends, to the NSF, a request for changing the network service used by the UE, to trigger the NSF to send, to the PCF, the request for changing the policy of the network service used by the UE, to finally change the policy of the network service used by the UE. The following provides descriptions with reference to FIG. 6.

FIG. 6 is a schematic flowchart of a method 600 for providing a network service according to this application.

601: A UE 1 sends a request message #5 to an NSF, where the request message #5 is used to request to change a network service used by the UE 1. The request message #5 carries parameter information that is of the network service and that needs to be changed, or the request message #5 carries parameter information, of the network service that the UE 1 requests to change, that needs to be changed. For example, the request message #5 may carry a target value of the parameter information that needs to be changed, for example, a maximum transmission delay, a target transmission bandwidth, or the like of a connection service. Correspondingly, the NSF receives the request message #5 from the UE 1.

602: Optionally, the NSF performs authentication on a request corresponding to the request message #5. Optionally, a result of the authentication may be that the authentication succeeds or fails.

Optionally, in a possible case, if the authentication fails, the NSF may directly or indirectly return a response message (denoted as a response message b) for the request message #5 to the UE 1, where the response message b indicates that changing a policy of the network service of the UE 1 is rejected. Optionally, the response message b may further carry a rejection cause value. For example, the UE 1 does not have permission to change the policy of the network service, or a location of the UE 1 is not in a specified range, or parameter information of the network service that the UE 1 requests to modify cannot be met.

This embodiment of this application mainly describes a case in which the authentication succeeds. When the authentication succeeds, the NSF performs subsequent step 603.

603: The NSF sends a request message #6 to a PCF, where the request message #6 is used to request to change the policy of the network service used by the UE 1. Correspondingly, the PCF receives the request message #6 from the NSF.

Optionally, the PCF in step 603 may be a UE1 PCF, or may be a service PCF. This is not limited.

Optionally, the request message #6 may carry a first service policy, and the request message #6 is used to request to modify the policy of the network service of the first terminal device to the first service policy. That is, the first service policy is a policy for requesting the network service provided by a first network for the UE 1. The first service policy includes the target value of the parameter information that needs to be changed.

604: The PCF sends a response message #5 to the NSF, where the response message #5 carries a change result of the policy of the network service of the UE 1. Correspondingly, the NSF receives the response message #5 from the PCF.

Optionally, the change result may include the changed policy of the network service of the UE 1. The changed policy of the network service of the UE includes a changed value of the parameter information that needs to be changed.

Optionally, the change result may be the foregoing first service policy. In this case, it indicates that the PCF allows to modify the policy of the network service of the UE 1 to the first service policy. Alternatively, the change result may be a second service policy, and the second service policy is the policy of the network service provided by the first network for the UE 1. For example, the target value of the parameter information that the UE 1 requests to change does not meet a value range that is set by a network side for the UE 1, and the PCF returns a value of the parameter information provided by the PCF for the UE 1. Therefore, the second service policy is different from the first service policy requested by the UE 1.

605: The NSF sends a response message #6 for the request message #5 to the UE 1 based on the response message #5, where the response message #6 carries the change result. Correspondingly, the UE 1 receives the response message #6 from the NSF.

Optionally, in the method 600, changing the policy of the network service used by the UE 1 may include one or more of the following: adding a UE 2 to use the network service of the UE 1, changing a network service of the UE 2 that has accessed the first network in which the UE 1 is located or a policy of the network service, or the like. In this case, before step 601, step 606 is further included.

606: The UE 1 obtains identification information of the UE 2.

For step 606, refer to the descriptions in step 501. Details are not described again.

Correspondingly, the request message #5 in step 601 further carries the identification information of the UE 2. In addition, the response message #5 in step 604 further carries the policy of the network service of the UE 2, and optionally may further include token information of the UE 2. In this implementation, the PCF further generates the token information of the UE 2.

607: The UE 2 obtains the policy of the network service and the token information of the UE 2.

In step 607, the UE 2 may obtain the policy of the network service and the token information of the UE 2 in a plurality of implementations. For example, optionally, the policy of the network service and the token information of the UE 2 may be directly sent by the PCF to the UE 2; or the policy of the network service and the token information of the UE 2 may be carried in the response message #5, sent by the PCF to the NSF, sent by the NSF to the UE 1 by using the response message #6, and finally sent by the UE 1 to the UE 2. This is not limited. In addition, reference may be further made to another implementation in which the UE 2 obtains the policy of the network service and the token information of the UE 2 in steps 507 to 509 in FIG. 5. Details are not described again.

According to the method in FIG. 6, the terminal device may flexibly change the network service of the terminal device by sending the request for changing the network service to the NSF.

(3) The first network element is a UNCF, and the first request message is used to request to change the network service used by the first terminal device. For example, the UNCF may be an application function (application function, AF) deployed in a data network (data network, DN), for example, an AF in a 5G network.

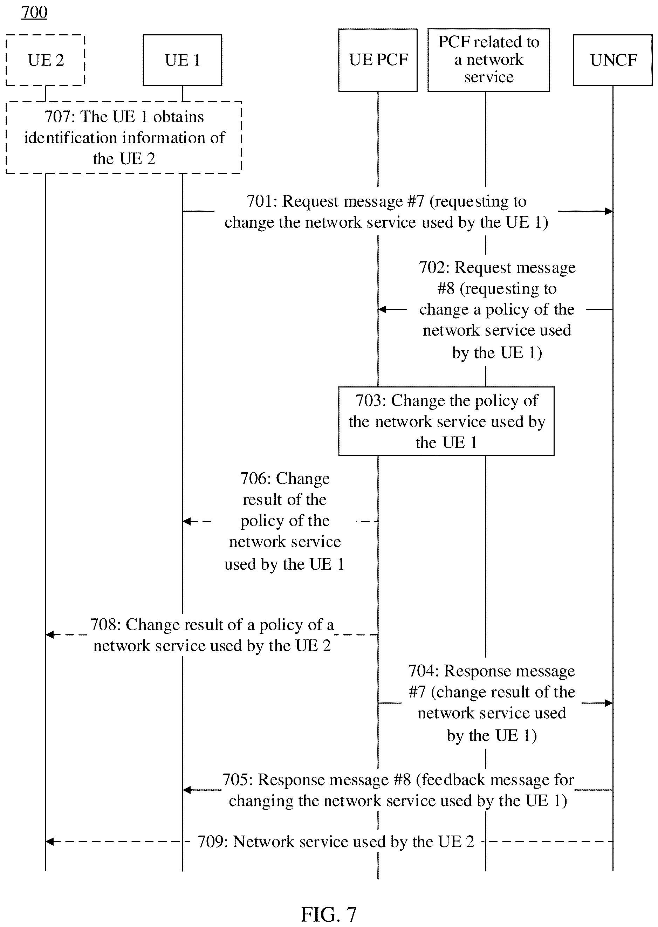

Specifically, the UE sends the request for changing the network service to the UNCF, and then the UNCF sends the request for changing the policy of the network service to the UE PCF, to finally change the policy of the network service used by the UE. In this implementation, interaction between the UNCF and the UE PCF is added. The following provides descriptions with reference to FIG. 7.

FIG. 7 is a schematic flowchart of a method 700 for providing a network service according to this application.

701: A UE 1 sends a request message #7 to a UNCF, where the request message #7 is used to request to change a network service used by the UE 1.

Correspondingly, the UNCF receives the request message #7 from the UE 1.

For the request message #7 in step 701, refer to the descriptions of the request message #5 in step 601.

702: The UNCF sends a request message #8 to a UE PCF based on the request message #7, where the request message #8 is used to request to change a policy of a network service used by the UE 1.

Correspondingly, the UE PCF receives the request message #8 from the UNCF.

703: The UE PCF interacts, based on the request message #8, with a PCF related to the network service (optional) and an NSF, to change the policy of the network service used by the UE 1.

Specifically, the UE PCF may perform authentication on a request corresponding to the request message #8. When the UE 1 is allowed to change the policy of the used network service (that is, the authentication succeeds), the UE PCF sends, to the PCF related to the network service (namely, a service PCF), the request for changing the policy of the network service of the UE 1. Then, after the service PCF interacts with the NSF, to complete the change of the policy of the network service used by the UE1, the service PCF directly or indirectly feeds back a change result to the UE PCF. The change result may include the changed policy of the network service of the UE 1. For detailed descriptions in step 703, refer to steps 503 to 507 in the method 500. Details are not described herein again.

Optionally, as described above, if the UE PCF and the service PCF are integrated, an interaction operation between the UE PCF and the service PCF is an internal operation of the UE PCF.

In another possible implementation, the UNCF may send the request message #8 to the service PCF; and after completing the change of the policy of the service, the service PCF sends a policy update result to the UE 1 through the UE PCF or directly.

704: The UE PCF sends a response message #7 to the UNCF, where the response message #7 carries the change result of the network service used by the UE 1, for example, a changed value of parameter information of the network service that needs to be changed. It should be understood that the response message #7 may be a response message for the request message #8.

Correspondingly, the UNCF receives the response message #7.

705: The UNCF sends a response message #8 to the UE 1 based on the response message #7, where the response message #8 is a feedback for the request message #7, and the feedback indicates that the change of the policy of the network service of the UE 1 has been completed. Correspondingly, the UE 1 receives the response message #8 from the UNCF.

Optionally, the method 700 may further include step 706.

706: The UE PCF feeds back the changed policy of the network service of the UE 1 to the UE 1. In other words, after the policy of the network service of the UE 1 is changed, the UE PCF may feed back the change result to the UE 1. Correspondingly, the UE receives the change result from the UE PCF. The change result carries the changed value of the parameter information of the network service that needs to be changed.

Optionally, in the foregoing procedure, changing the policy of the network service of the UE 1 may include one or more of the following possible cases: adding a UE 2 to use the network service of the UE 1, deleting the UE 2 using the network service of the UE 1, changing a network service of the UE 2 that has accessed the first network in which the UE 1 is located or a policy of the network service, or the like. In this case, the method 700 may further include step 707.

707: The UE 1 obtains identification information of the UE 2.

For step 707, refer to the descriptions in step 501 in the foregoing method 500. Details are not described again.

In the foregoing case, the request message #7 may carry the identification information of the UE 2. The identification information of the UE 2 is sent to the UE PCF through the UNCF. Optionally, if the UE 2 using the network service of the UE 1 is deleted, or permission of the UE 2 for using the network service of the UE 1 is canceled, the UE PCF deletes, based on the identification information, of the UE 2, carried in the request message #7, the policy of the network service of the UE 2, indicates the NSF to delete a service rule related to the policy of the network service of the UE 2, and finally returns a notification message to the UE 1 directly or indirectly, where the notification message indicates that a network side has deleted the policy of the network service of the UE 2.

Optionally, if the UE 2 using the network service of the UE 1 is added or the policy of the network service or the network service of the UE 2 is added, the UE PCF may generate token information of the UE 2, and directly or indirectly send the token information of the UE 2 to the UE 2, as shown in step 708. In addition, as shown in FIG. 5, for related descriptions of the token information of the UE 2, the token information may alternatively be generated by a PCF related to the network service or the UE 1, and directly or indirectly provided to the UE. This is not limited in this embodiment. In addition, optionally, the change result of the policy of the network service of the UE 2 and the token information may be provided to the UE 2 in a plurality of manners. For details, refer to descriptions of the specific implementation in FIG. 5. The following step 708 is used as an example of a specific implementation of obtaining, by the UE 2, the changed policy of the network service and the token information.

708: The UE PCF feeds back the policy of the network service of the UE 2 to the UE 2. Optionally, the feedback further includes the token information of the UE 2.

In addition, optionally, the method 700 further includes step 709.

709: The UNCF sends a feedback for the network service of the UE 2 to the UE 2, where the feedback indicates that the change of the policy of the network service of the UE 2 has been completed. Correspondingly, the UE 2 receives the feedback from the UNCF.

In another implementation, the feedback of the network service of the UE 2 may be fed back by the UNCF to the UE 1, and then the UE 1 sends the feedback to the UE 2. This is not limited.

According to the method in FIG. 7, the terminal device (the UE 1) may flexibly change the network service of the terminal device by sending the request for changing the network service to the UNCF. Optionally, the terminal device may flexibly control, by including an identifier of another terminal device (for example, the UE 2) in the request for changing the network service, that the another terminal device uses the network service provided by the first network (a network accessed by the UE 1), for example, add or cancel the another terminal device to use the network service, or change use permission of the another terminal device using the network service.

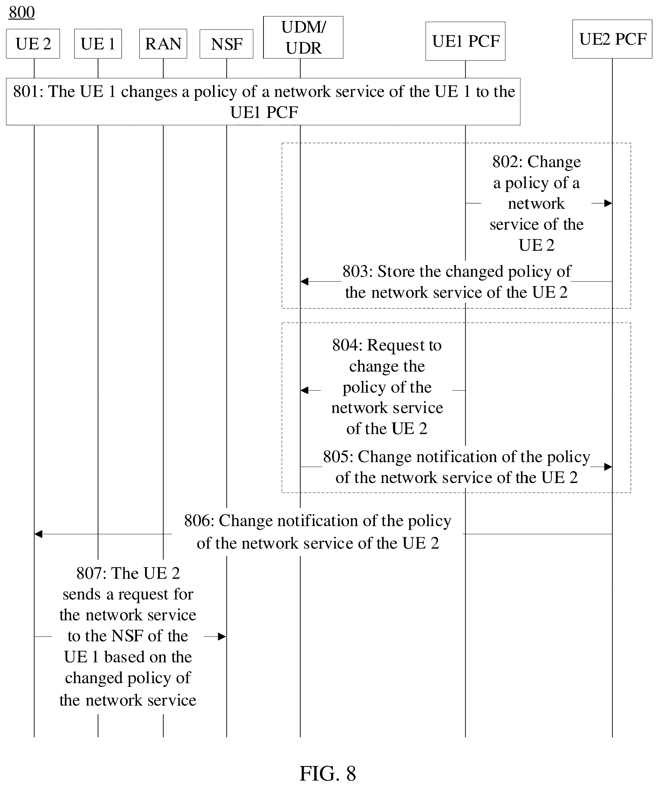

Optionally, if changing the policy of the network service of the UE 1 includes one or more of the following cases: changing the policy of the network service of the UE 2 and adding the UE 2 to use the network service of the UE 1, the following further provides a specific solution of changing the policy of the network service of the UE. The following provides descriptions with reference to FIG. 8.

FIG. 8 is a schematic flowchart of a method 800 for providing a network service according to this application.

801: A UE 1 changes a policy of a network service of the UE 1 to a UE1 PCF.

For a specific implementation of step 801, refer to the foregoing embodiments, for example, any one of the method 500 to the method 700. Details are not described again.

It should be understood that a prerequisite of the following procedure is changing the policy of the network service of the UE 1, including changing a policy of a network service of a UE 2 or adding the UE 2 to use the network service of the UE 1.

After step 801, steps included in the following option 1 or option 2 may be performed.

### Option 1

802: The UE1 PCF sends, to a UE2 PCF, a request for changing the policy of the network service of the UE 2. Correspondingly, the UE2 PCF receives the request from the UE1 PCF.

Specifically, the UE1 PCF may find, based on identification information of the UE 2, a PCF providing the network service for the UE 2.

803: The UE2 PCF updates the changed policy of the network service of the UE 2 to a UDM/UDR.

### Option 2

804: The UE1 PCF sends, to the UDM/UDR, a request for changing the policy of the network service of the UE 2. Correspondingly, the UDM/UDR receives the request from the UE1 PCF.

805: After completing the change of the policy of the network service of the UE 2, the UDM/UDR sends a change notification to the UE2 PCF, to notify the UE2 PCF of the changed policy of the network service of the UE 2. Correspondingly, the UE2 PCF receives the change notification from the UDM/UDR.

806: The UE2 PCF sends the changed policy of the network service of the UE 2 to the UE 2. Correspondingly, the UE 2 receives the changed policy of the network service of the UE 2 from the UE2 PCF.

807: The UE 2 sends a request for the network service to an NSF of the UE 1 based on the changed policy of the network service of the UE 2. Correspondingly, the NSF of the UE 1 receives the request from the UE 2.

For example, if the changed policy of the network service of the UE 2 includes that if the UE 2 may use an AI service of the UE 1, the UE 2 may send an AI service request to the NSF of the UE 1.

According to the method in FIG. 8, the first terminal device requests the PCF of the first terminal device to change the policy of the network service of the first terminal device, so that the network service of the first terminal device can be flexibly changed. If the change of the policy of the network service relates to the change of the policy of the second terminal device, the PCF of the first terminal device interacts with the PCF of the second terminal device, so that the first terminal device can flexibly change the network service of the second terminal device. Therefore, the first terminal device may not only change the network service of the first terminal device, but also flexibly change the network service of the second terminal device using the network service of the first terminal device.

The foregoing describes in detail the method for providing a network service in this application. The following describes a communication apparatus provided in this application.

To implement functions of the communication apparatus (for example, a terminal, a UE PCF, a PCF related to a network service, an NSF, a UNCF, or an AF) in embodiments of this application, each communication apparatus may implement corresponding functions in a form of a hardware structure, a software module, or a combination of a hardware structure and a software module.

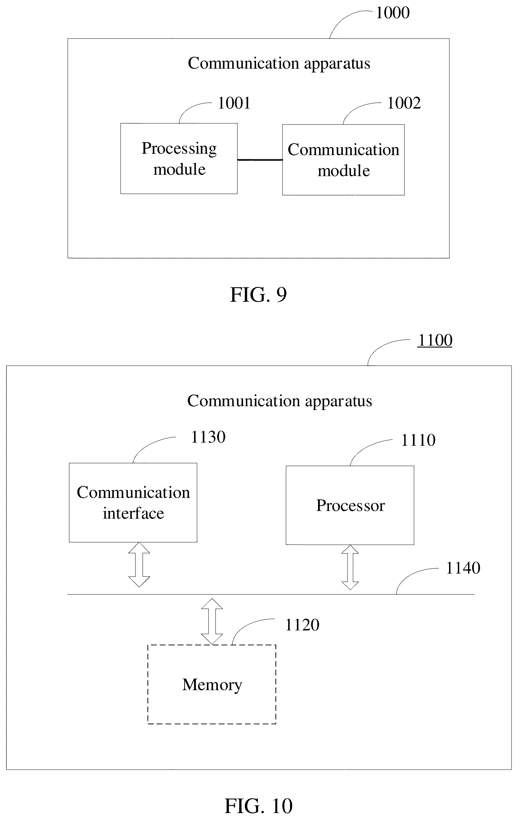

FIG. 9 shows a communication apparatus 1000 according to this application.

As shown in FIG. 9, the communication apparatus 1000 includes a processing module 1001 and a communication module 1002. The communication apparatus 1000 may be a communication device, or may be an apparatus that is used in the communication device and that can implement a corresponding function of the communication device, for example, a chip, a chip system, or a circuit. For example, the communication device may include a terminal device (for example, a first terminal device or a second terminal device), a UE PCF, a PCF related to a network service (for example, a service PCF in the method embodiments), an NSF, a UNCF, an AF, or the like.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the terminal device or the network device in any one of the foregoing method embodiments. A component configured to implement a receiving function in the communication module may be considered as a receiving unit, and a component configured to implement a sending function in the communication module may be considered as a sending unit. In other words, the communication module includes the receiving unit and the sending unit. The processing module is configured to perform an operation/processing related to an internal implementation of the terminal device or the network device in any one of the foregoing method embodiments. It should be understood that for a corresponding specific operation of each module, refer to the descriptions in the method embodiments. Details are not described again.

In addition, it should be noted that the communication module and/or the processing module may be implemented through a virtual module. For example, the processing module may be implemented through a software functional unit or a virtual apparatus, and the communication module may be implemented through a software function or a virtual apparatus. Alternatively, the processing module or the communication module may be implemented through an entity apparatus. For example, if the apparatus is implemented through a chip/hardware circuit, the communication module may be an input/output circuit and/or a communication interface, and perform an input operation (corresponding to the foregoing receiving operation) and an output operation (corresponding to the foregoing sending operation). The processing module is an integrated circuit, a logic circuit, or the like.

Division into the modules in this application is an example, is merely division into logical functions, and may be other division during actual implementation. In addition, functional modules in examples of this application may be integrated into one module, or each of the modules may exist alone physically, or two or more modules may be integrated into one module. The foregoing integrated module may be implemented in a form of hardware, or may be implemented in a form of a software functional module, or a functional module combining hardware and software. This is not limited.

Refer to FIG. 10. This application further provides a communication apparatus 1100.

Optionally, the communication apparatus 1100 may be a chip or a chip system. Optionally, in this application, the chip system may include a chip, or may include a chip and another discrete device.

The communication apparatus 1100 may be configured to implement a function of any network element (for example, a terminal, a first network element, a second network element, an NSF, a UNCF, or an AF) in the communication system described in the foregoing examples. The communication apparatus 1100 may include at least one processor 1110. Optionally, the processor 1110 (or a processing apparatus) is coupled to a memory. The memory may be located in the communication apparatus, the memory may be integrated with the processor, or the memory may be located outside the communication apparatus. For example, the communication apparatus 1100 may further include at least one memory 1120. The memory 1120 stores a computer program, instructions, and/or data that are/is necessary for implementing any one of the foregoing embodiments. The processor 1110 may execute the computer program, the instructions, and/or the data that are/is stored in the memory 1120, to complete a corresponding function of any network element in any one of the foregoing embodiments.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or another type of communication interface. When the communication apparatus 1100 is a chip-type apparatus or circuit, the communication interface 1130 in the apparatus 1100 may alternatively be an input/output circuit, and may input information (or referred to as receiving information) and/or output information (or referred to as sending information). The processor may be an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

Optionally, the processor 1110, the memory 1120, and the communication interface 1130 are connected to each other through a bus 1140. For ease of representation, the bus is represented by using only one line in FIG. 10, but it does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store the program instructions and/or the data.

In addition, this application provides a communication apparatus. The communication apparatus includes at least one processor. The at least one processor is coupled to at least one memory, and the at least one processor is configured to execute a computer program or instructions stored in the at least one memory, so that the communication apparatus has a function of a corresponding network element (for example, a terminal device, a first network element, a second network element, an NSF, a UNCF, or an AF) in any one of the foregoing embodiments.

This application further provides a chip. The chip includes a processor and a communication interface. The communication interface is configured to receive to-be-processed information and/or data, and send the to-be-processed information and/or data to the processor, and the processor is configured to process the to-be-processed information and/or data, so that a communication apparatus in which the chip is installed has a function of a corresponding network element (for example, a terminal, a first network element, a second network element, an NSF, a UNCF, or an AF) in any one of the foregoing embodiments.

This application further provides a computer-readable storage medium. The computer-readable storage medium stores computer instructions. When the computer instructions are run on a computer, a function of a corresponding network element (for example, a terminal device, a first network element, a second network element, an NSF, a UNCF, or an AF) in any one of the foregoing embodiments is implemented.

This application further provides a computer program product. The computer program product includes computer program code. When the computer program code is run on a computer, a function of a corresponding network element (for example, a terminal device, a first network element, a second network element, an NSF, a UNCF, or an AF) in any one of the foregoing embodiments is implemented.

This application further provides a wireless communication system. The wireless communication system includes one or more network elements in any one of the foregoing embodiments. For example, the communication system includes a terminal, a first network element, and an NSF, or includes a terminal device, a first network element, a second network element, and an NSF; or in addition to a combination of the foregoing network elements, the communication system further includes a UDM/UDR and the like.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of an example but not a limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). When the processor is a general-purpose processor, a DSP, an ASIC, an FPGA or another programmable logic device, a discrete gate or transistor logic device, or a discrete hardware component, the memory (a storage module) may be integrated into the processor.

All or some of the technical solutions provided in this application may be implemented by software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

In the descriptions of embodiments of this application, "a plurality of" means two or more. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

Unless otherwise specified, "/" in the descriptions of embodiments of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for providing a network service, applied to a first terminal device, wherein the method comprises:
sending a first request message to a first network element, wherein
the first request message is used to request to change a policy of a network service of the first terminal device, and the first request message carries information used to change the policy of the network service; or
the first request message is used to request to change a network service of the first terminal device, and the first request message carries parameter information that is of the network service and that needs to be changed; and
receiving a first response message for the first request message.

2. The method according to claim 1, wherein the first network element is a policy control function PCF or a user network control function UNCF, and the first request message is used to request to change the policy of the network service of the first terminal device.

3. The method according to claim 2, wherein the first request message carries information about the network service, and the information about the network service comprises one or more of the following:
the network service comprises a connection service, and the information about the network service comprises identification information of a session;
the network service comprises a data service, and the information about the network service comprises identification information and/or address information of a storage device;
the network service comprises a computing service, and the information about the network service comprises information about a computing resource; or
the network service comprises a task service, and the information about the network service comprises identification information of a task.

4. The method according to any one of claims 1 to 3, wherein changing the policy of the network service comprises one or more of the following:
adding and/or deleting a terminal device using the network service;
adding and/or deleting a network device providing the network service;
changing use permission of the terminal device using the network service;
changing the policy of the network service used by the terminal device using the network service; and
changing subscription information of a status of using the network service by the terminal device using the network service.

5. The method according to claim 4, wherein the use permission comprises one or more of the following:
information about an application and/or a website that are/is allowed to be used;
information about an application and/or a website that are/is prohibited from being used;
allowing the terminal device using the network service to use a network device in a first network, wherein the network service is provided by the first network.

6. The method according to claim 4 or 5, wherein the policy of the network service further comprises one or more of the following:
duration of the network service;
data usage of the network service;
quality of service QoS of the network service; and
that a location of the terminal device using the network service is in a preset location range.

7. The method according to any one of claims 1 to 6, wherein the first response message indicates that the first network element accepts a request for changing the policy of the network service of the first terminal device, and the first response message further comprises a change result of the policy of the network service of the first terminal device.

8. The method according to claim 7, wherein changing the policy of the network service of the first terminal device comprises one or more of the following cases:
adding a second terminal device to use the network service; and
changing a policy of a network service of the second terminal device, wherein the second terminal device and the first terminal device have accessed the first network, and the network service is provided by the first network.

9. The method according to claim 8, wherein the first request message further carries information about the second terminal device, the first response message further comprises token information of the second terminal device and/or the policy of the network service provided by the first network for the second terminal device, the token information is used for identity identification or verification for the second terminal device to use the network service provided by the first network, and the first network is a network in which the first terminal device is located.

10. The method according to claim 9, wherein the method further comprises:
sending, to the second terminal device based on the first response message, the token information and/or the policy of the network service provided by the first network for the second terminal device.

11. The method according to claim 1, wherein the first network element is a network service function NSF, a user network control function UNCF, or an application server AF, and the first request message is used to request to change the network service of the first terminal device.

12. The method according to claim 11, wherein changing the network service of the first terminal device comprises one or more of the following cases:
adding a second terminal device to use the network service; and
changing a network service used by the second terminal device, wherein the network service used by the second terminal device is provided by a first network, and the first terminal device and the second terminal device have accessed the first network.

13. A method for providing a network service, applied to a first network element, wherein the method comprises:
receiving a first request message from a first terminal device, wherein the first request message is used to request to change a policy of a network service used by the first terminal device, and the first request message carries information for changing the policy of the network service; and
sending a first response message for the first request message to the first terminal device.

14. The method according to claim 13, wherein the method further comprises:
sending a second request message to a second network element based on the first request message, wherein the second request message is used to request to change the policy of the network service of the first terminal device; and
receiving a second response message for the second request message from the second network element.

15. The method according to claim 14, wherein the second response message indicates that a request for changing the policy of the network service of the first terminal device is accepted, and the second response message carries a change result of the policy of the network service of the first terminal device; and
the first response message further carries the change result.

16. The method according to any one of claims 13 to 15, wherein changing the policy of the network service of the first terminal device comprises at least one of the following cases:
adding a second terminal device to use the network service; and
changing a policy of a network service of the second terminal device, wherein the second terminal device and the first terminal device have accessed a first network, and the network service is provided by the first network.

17. The method according to claim 16, the first request message further carries information about the second terminal device, the first response message further comprises token information of the second terminal device and/or the policy of the network service provided by the first network for the second terminal device, and the token information is used for identity identification or verification for the second terminal device to use the network service provided by the first network.

18. The method according to claim 17, wherein the method further comprises:
sending a third response message to the second terminal device, wherein the third response message comprises the token information and/or the policy of the network service provided by the first network for the second terminal device.

19. A communication apparatus, comprising a module or a unit configured to perform the method according to any one of claims 1 to 18.

20. A communication apparatus, comprising:
a processor, wherein the processor is coupled to a memory, and the processor is configured to execute a computer program or instructions stored in the memory, to enable the communication apparatus to perform the method according to any one of claims 1 to 18.

21. A chip, comprising a processor and a communication interface, wherein the communication interface is configured to receive to-be-processed information and/or data, and send the to-be-processed information and/or data to the processor, and the processor is configured to process the to-be-processed information and/or data, so that a communication apparatus in which the chip is installed performs the method according to any one of claims 1 to 18.

22. A computer-readable storage medium, wherein the computer-readable storage medium stores computer instructions; and when the computer instructions are run on a computer, the method according to any one of claims 1 to 18 is implemented.

23. A computer program product, wherein the computer program product comprises computer program code; and when the computer program code is run on a computer, the method according to any one of claims 1 to 18 is implemented.

24. A wireless communication system, comprising the communication apparatus according to claim 19 or 20.
